# EUROPEAN PATENT SPECIFICATION

(11) **EP 1 605 184 B1**
(45) Date of publication and mention of the grant of the patent: **01.08.2007**
(21) Application number: 04721636.1
(22) Date of filing: 18.03.2004
(51) Int. Cl.: F16F 13/00

(54) **VIBRATION ISOLATOR AND METHOD OF PRODUCING THE SAME**
SCHWINGUNGSISOLATOR UND HERSTELLUNGSVERFAHREN DAFÜR
ISOLATEUR DE VIBRATIONS ET SON PROCEDE DE FABRICATION

(30) Priority: 18.03.2003 JP 2003073164
(43) Date of publication of application: 14.12.2005
(73) Proprietor: Bridgestone Corporation, Tokyo 104-8340 (JP)
(72) Inventor: KOJIMA, Hiroshi, c/o BRIDGESTONE CORPORATION, Tokyo 104-8340 (JP); OGAWA, Kazuya, c/o BRIDGESTONE CORPORATION, Tokyo 104-8340 (JP)
(74) Representative: Whalley, Kevin
(86) International application number: PCT/JP2004/003628
(87) International publication number: WO 2004/083674

(56) References cited:
- JP-A- 9 072 365
- JP-A- 11 257 413
- JP-A- 2001 050 331

## Description

### TECHNICAL FIELD

The present invention relates to a vibration-proofing apparatus, which is employed at, for example, a vehicle, building machinery, general industrial machinery or the like and which absorbs vibrations from a vibration-generating portion, and a fabrication method thereof. Particularly, it relates to a vibration-proofing apparatus which prevents the generation of looseness, abnormal noises and the like, and a fabrication method thereof.

### RELATED ART

Heretofore, between an engine which acts as a vibration-generating portion of a vehicle and a vehicle body which acts as a vibration-receiving portion, a vibration-proofing apparatus which serves as an engine mount has been provided. This vibration-proofing apparatus absorbs vibrations generated by the engine, prevents transmission to the vehicle body side, and improves riding comfort. Such a vibration-proofing apparatus is ordinarily composed of: a mounting fixture, which is joined to either one of the vibration-generating portion and the vibration-receiving portion; an outer casing fixture made of resin, which is joined to the other of the vibration-receiving portion and the vibration-generating portion; and a rubber resilient body fixed between the mounting fixture and the outer casing fixture. Now, in recent years, in accordance with demands for cost reductions, weight reductions and the like, vibration-proofing apparatuses in which the outer casing fixture, which has conventionally been made of metal, is made of resin instead have been developed.

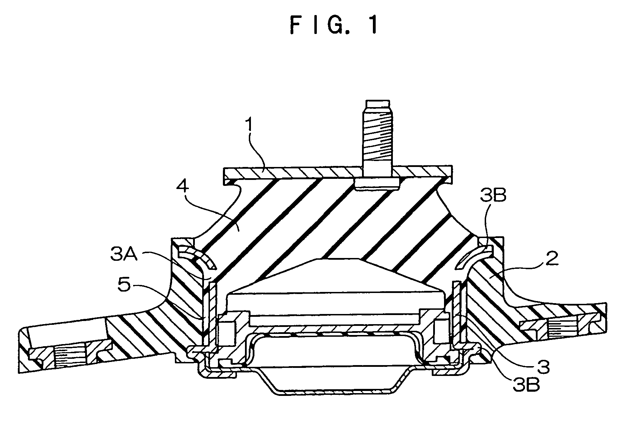

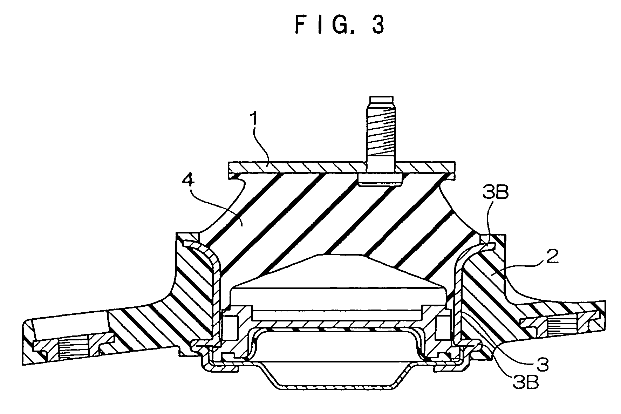

However, when an outer casing member made of resin is used, differently from the case of an outer casing fixture made of metal, it is not possible to vulcanization-adhere the rubber resilient body to the outer casing member. Therefore, as shown in Figure 3, attachment of a rubber resilient body 4 to an outer casing member 2 via an insert fixture 3 is implemented. That is, the rubber resilient body 4 is vulcanization-adhered between a mounting fixture 1 and the insert fixture 3, the outer casing member 2 is sandwiched by insert fixing portions 3B, and an inner peripheral face of the outer casing member 2 made of resin is covered with the insert fixture 3. Thus, the rubber resilient body 4 is attached to the outer casing member 2 without the use of adhesive (see, for example, page 2 and Figure 1 of the publication of Japanese Patent Application Laid-Open (JP-A) No. 2001-50331).

Thus, in the conventional vibration-proofing apparatus shown in Figure 3, rather than the outer casing member 2 and the insert fixture 3 being adhered, the insert fixing portions 3B are embedded in the outer casing member 2, and the outer casing member 2 and insert fixture 3 are simply pressed together without a gap. Hence, usually, because of the presence of the insert fixing portions 3B and frictional force, sufficient fixing force is maintained.

However, in resin-molding of the outer casing member 2, contraction of the resin may be a problem. That is, if the outer casing member 2 made of resin contracts, a gap may occur between the outer casing member 2 and the insert fixture 3. The occurrence of looseness at the insert fixture 3 and the generation of abnormal noises and the like because of this gap are a cause of concern.

### DISCLOSURE OF THE INVENTION

Accordingly, the present invention has as an objective the provision of a vibration-proofing apparatus which is capable of reliably preventing occurrences of looseness, abnormal noises and the like and a fabrication method thereof, even if, responding to demands for cost reduction, weight reduction and the like by employing an outer casing member made of resin, the outer casing member is unadhered.

The present invention has been devised in order to solve the problem described above, and the substance thereof relates to a vibration-proofing apparatus composed of: a mounting fixture, which is joined to either one of a vibration-generating portion and a vibration-receiving portion; an outer casing member made of resin, which is joined to the other of the vibration-receiving portion and the vibration-generating portion; and a rubber resilient body, which is fixed between the mounting fixture and an insert fixture, the insert fixture being arranged along an inner peripheral face of the outer casing member, and the rubber resilient body being attached to the outer casing member via the insert fixture with the outer casing member being disposed between insert fixing portions of the insert fixture, in which vibration-proofing apparatus a buffer material is interposed between the outer casing member and the insert fixture.

Further, it relates to a vibration-proofing apparatus in which, preferably, the buffer material is composed of the same rubber as the rubber resilient body and, more preferably, a hole is provided in the insert fixture, and the rubber resilient body and buffer material are integrated by the hole.

Further, another substance of the present invention relates to a fabrication method of a vibration-proofing apparatus which is composed of: a mounting fixture, which is joined to either one of a vibration-generating portion and a vibration-receiving portion; an outer casing member made of resin, which is joined to the other of the vibration-receiving portion and the vibration-generating portion; and a rubber resilient body, which is fixed between the mounting fixture and an insert fixture, the insert fixture being arranged along an inner peripheral face of the outer casing member, and the rubber resilient body being attached to the outer casing member via the insert fixture with the outer casing member being disposed between insert fixing portions of the insert fixture, the vibration-proofing apparatus fabrication method being: preparatorily inserting the insert fixture in a mold for molding of the rubber resilient body, or employing the insert fixture itself as a portion of the mold; causing raw rubber of the rubber resilient body to be packed around a surface of the insert fixture and forming a buffer material, which is composed of the same rubber as the rubber resilient body, integrally at the surface of the insert fixture; thereafter, arranging the insert fixture in a mold at which a cavity corresponding to a shape of the outer casing member is formed; and, by injecting resin into the mold and forming the outer casing member, causing the buffer material to be interposed between the outer casing member and the insert fixture.

Further, it relates to a vibration-proofing apparatus fabrication method in which, preferably, a hole is provided in the insert fixture, and the raw rubber passes through the hole and is packed around the surface of the insert fixture.

### BRIEF DESCRIPTION OF THE DRAWINGS

Figure 1 is a sectional view showing an example of a vibration-proofing apparatus of the present invention.
Figure 2 is a sectional view showing an example of a vibration-proofing apparatus fabrication method of the present invention.
Figure 3 is a sectional view showing a conventional vibration-proofing apparatus.

### BEST MODE FOR CARRYING OUT THE INVENTION

A vibration-proofing apparatus of the present invention is an apparatus composed of a mounting fixture joined to either one of a vibration-generating portion and a vibration-receiving portion, an outer casing member joined to the other of the vibration-receiving portion and the vibration-generating portion, and a rubber resilient body. That is, because of vibration-proofing effects of the rubber resilient body, the apparatus features a damping function and an isolation function with respect to inputs of vibrations. The apparatus is between, for example, an engine which acts as the vibration-generating portion of a vehicle and a vehicle body which acts as the vibration-receiving portion, and absorbs vibrations generated by the engine and blocks transmission to the vehicle body side. Thus, the vibration-proofing apparatus of the present invention exhibits similar characteristics to a conventional apparatus in regard to inputs of vibrations during load-bearing.

Further, in the vibration-proofing apparatus of the present invention, the outer casing member is made of resin. That is, the outer casing fixture, which would conventionally be made of metal, is made of resin instead. Hence, a cost reduction, a weight reduction and the like are anticipated. Herein, because of the impossibility of vulcanization-adhering the rubber resilient body to the outer casing fixture made of resin, the rubber resilient body is vulcanization-adhered between the mounting fixture made of metal and the insert fixture, and the insert fixture is arranged along an inner peripheral face of the outer casing member. Thus, the rubber resilient body is attached to the outer casing member via the insert fixture.

In this case, if a contraction of the resin occurs in resin-molding of the outer casing member, a gap will occur between the outer casing member and the insert fixture, and looseness, abnormal noises and the like may be generated because of this gap. Accordingly, specifically to the present invention, a buffer material is interposed between the outer casing member and the insert fixture. Thus, even if a contraction occurs at the outer casing member made of resin, because of the presence of the buffer material, a gap will not occur between the outer casing member and the insert fixture.

Herein, rubber is suitable as the buffer material. In particular, employing the same rubber as the rubber resilient body and forming a rubber layer at an outer peripheral face of the insert fixture is preferable. That is, the rubber resilient body is ordinarily vulcanization-adhered between the mounting fixture and the insert fixture and, at this time, the insert fixture is preparatorily inserted into a mold for molding of the rubber resilient body, or the insert fixture itself is employed as a portion of the mold. Thus, vulcanization-adhesion is implemented simultaneously with curing of raw rubber in the mold. Further, if this raw rubber is packed around a surface of the insert fixture, it is possible to obtain the buffer material simply.

For example, if a hole is provided in the insert fixture, the raw rubber passes through this hole and is packed around the surface of the insert fixture, and the rubber layer is formed simultaneously with molding. Accordingly, the rubber resilient body and the buffer material will be integrated by the hole of the insert fixture.

### EXAMPLE

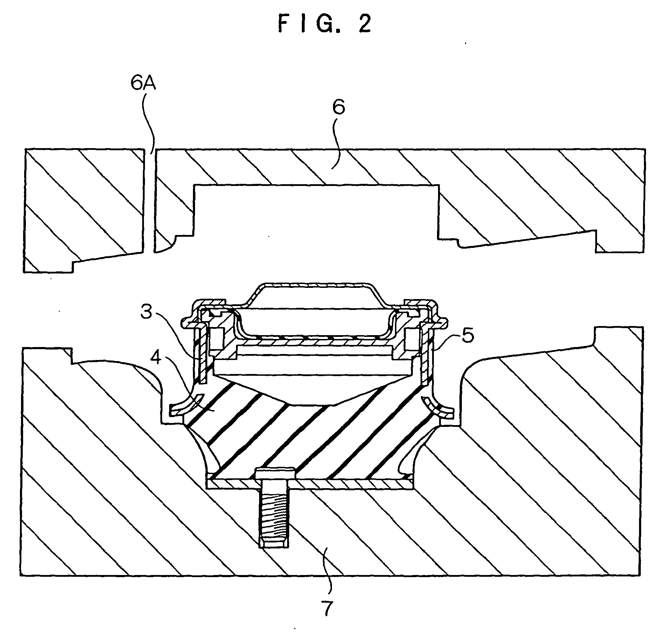

Herebelow, a concrete example of a preferable embodiment of the present invention will be described in accordance with the drawings. Figure 1 is a sectional view showing an example of a vibration-proofing apparatus of the present invention. Further, Figure 2 is a sectional view showing an example of a vibration-proofing apparatus fabrication method of the present invention. The vibration-proofing apparatus of the example shown in Figure 1 is provided with a mounting fixture 1, which is mounted at an engine which is a vibration-generating portion, and an outer casing member 2, which is mounted at a vehicle body which is a vibration-receiving portion. Here, the outer casing member 2 has been made of resin. Consequently, a reduction in cost, a reduction in weight and the like can be anticipated, but it is not possible to vulcanization-adhere the rubber resilient body. Accordingly, an insert fixture 3 is arranged along an inner peripheral face of the outer casing member 2.

Further, between the mounting fixture 1 and the insert fixture 3, a rubber resilient body 4 of NR-type rubber is fixed by vulcanization-adhesion. This rubber resilient body 4 is vulcanization-adhered with the mounting fixture 1 and the insert fixture 3 in a mold for molding and, at this time, because a hole 3A is provided in the insert fixture 3, raw rubber passes through the hole 3A and is packed around a surface of the insert fixture 3. Consequently, a buffer material 5 composed of the same rubber as the rubber resilient body 4 will be integrally formed at the surface of the insert fixture 3.

Then, as shown in Figure 2, the insert fixture 3, at which the buffer material 5 composed of the same rubber as the rubber resilient body 4 is integrally formed, is arranged at a lower die 7 and, in a mold in which a cavity corresponding to the shape of the outer casing member 2 is formed by an upper die 6 and the lower die 7, resin is injected through an injection port 6A of the upper die 6 and forms the outer casing member 2. Consequently, as shown in Figure 1, the outer casing member 2 will be inserted between insert fixing portions 3B, the insert fixing portions 3B embedded in the outer casing member 2, and the rubber resilient body 4 attached to the outer casing member 2 made of resin, via the insert fixture 3, without the use of adhesive. Further, the buffer material 5 composed of the same rubber as the rubber resilient body 4 will be interposed between the outer casing member 2 and the insert fixture 3.

### INDUSTRIAL APPLICABILITY

The vibration-proofing apparatus of the present invention is composed of: a mounting fixture, which is joined to either one of a vibration-generating portion and a vibration-receiving portion; an outer casing member made of resin, which is joined to the other of the vibration-receiving portion and the vibration-generating portion; and a rubber resilient body, which is fixed between the mounting fixture and an insert fixture, the insert fixture being arranged along an inner peripheral face of the outer casing member, and the rubber resilient body being attached to the outer casing member via the insert fixture, in which vibration-proofing apparatus a buffer material is interposed between the outer casing member and the insert fixture. Thus, in addition to effects of cost reduction, weight reduction and the like due to the outer casing member 2 being made of resin, it is possible to reliably prevent the generation of looseness, abnormal noises and the like, even though the outer casing member is unadhered. Further, according to the vibration-proofing apparatus fabrication method of the present invention, a vibration-proofing apparatus as described above can be fabricated simply.

## Claims

1. A vibration-proofing apparatus comprising: a mounting fixture (1), which is to be joined to either one of vibration-generating portion and vibration-receiving portion; an outer casing member (2) made of resin, which is to be joined to the other of the vibration-receiving portion and the vibration-generating portion; and a rubber resilient body (4), which is fixed between the mounting fixture (1) and an insert fixture (3), the insert fixture (3) being arranged along an inner peripheral face of the outer casing member (2), and the rubber resilient body (4) being attached to the outer casing member (2) via the insert fixture (3) with the outer casing member (2) being disposed between insert fixing portions (3B) of the insert fixture (3), the vibration-proofing apparatus being **characterized by** interposition of a buffer material (5) between the outer casing member (2) and the insert fixture (3).

2. The vibration-proofing apparatus of claim 1, wherein the buffer material (5) is composed of the same rubber as the rubber resilient body (4).

3. The vibration-proofing apparatus of claim 2, wherein a hole (3A) is provided in the insert fixture (3), and the rubber resilient body (4) and buffer material (5) are integrated by the hole (3A).

4. A fabrication method of a vibration-proofing apparatus which is composed of: a mounting fixture (1), which is to be joined to either one of a vibration-generating portion and a vibration-receiving portion; an outer casing member (2) made of resin, which is to be joined to the other of the vibration-receiving portion and the vibration-generating portion; and a rubber resilient body (4), which is fixed between the mounting fixture (1) and an insert fixture (3), the insert fixture (3) being arranged along an inner peripheral face of the outer casing member (2), and the rubber resilient body (4) being attached to the outer casing member (2) via the insert fixture (3) with the outer casing member (2) being disposed between insert fixing portions (3B) of the insert fixture (3), the vibration-proofing apparatus fabrication method comprising: preparatorily inserting the insert fixture (3) in a mold for molding of the rubber resilient body (4), or employing the insert fixture (3) itself as a portion of the mold; causing raw rubber of the rubber resilient body (4) to be packed around a surface of the insert fixture (3) and forming a buffer material (5), which is composed of the same rubber as the rubber resilient body (4), integrally at the surface of the insert fixture (3); arranging the insert fixture (3) in a mold at which a cavity corresponding to a shape of the outer casing member (2) is formed; and, by injecting resin into the mold and forming the outer casing member (2), causing the buffer material (5) to be interposed between the outer casing member (2) and the insert fixture (3).

5. The vibration-proofing apparatus fabrication method of claim 4, wherein a hole (3A) is provided in the insert fixture (3), and the raw rubber passes through the hole (3A) and is packed around the surface of the insert fixture (3).

## Patentansprüche

1. Vibrationsschützende Vorrichtung, umfassend: eine Befestigungshalterung (1), welche zu verbinden ist mit entweder einem vibrationserzeugenden Abschnitt oder einem vibrationsempfangenden Abschnitt; ein äußeres Gehäusebauteil (2), hergestellt aus Harz, welches zu verbinden ist mit dem anderen des vibrationsempfangenden Abschnitts und des vibrationserzeugenden Abschnitts; und einen gummielastischen Körper (4), welcher zwischen der Befestigungshalterung (1) und einer Einsatzhalterung (3) befestigt ist, die Einsatzhalterung (3) ist entlang einer inneren peripheren Fläche des äußeren Gehäusebauteils (2) angeordnet, und der gummielastische Körper (4) ist an dem äußeren Gehäusebauteil (2) angeordnet durch die Einsatzhalterung (3), wobei das äußere Gehäusebauteil (2) zwischen Einsatzhalterungsabschnitten (3B) der Einsatzhalterung (3) angeordnet ist, wobei die vibrationsschützende Vorrichtung **gekennzeichnet ist durch** Einfügen eines Puffermaterials (5) zwischen das äußere Gehäusebauteil (2) und die Einsatzhalterung (3).

2. Vibrationsschützende Vorrichtung nach Anspruch 1, worin das Puffermaterial (5) aus demselben Gummi wie der gummielastische Körper (4) besteht.

3. Vibrationsschützende Vorrichtung nach Anspruch 2, worin ein Loch (3A) in der Einsatzhalterung (3) angeordnet ist, und der gummielastische Körper (4) und das Puffermaterial (5) eingebunden sind durch das Loch (3A).

4. Herstellungsverfahren für eine vibrationsschützende Vorrichtung, welche besteht aus: einer Befestigungshalterung (1), welche zu verbinden ist mit entweder einem vibrationserzeugenden Abschnitt oder einem vibrationsempfangenden Abschnitt; einem äußeren Gehäusebauteil (2) aus Harz, welches zu verbinden ist mit dem anderen des vibrationsempfangenden Abschnitts und des vibrationserzeugenden Abschnitts; und einem gummielastischen Körper (4), welcher zwischen der Befestigungshalterung (1) und einer Einsatzhalterung (3) befestigt ist, wobei die Einsatzhalterung (3) entlang einer inneren peripheren Seite des äußeren Gehäusebauteils (2) angeordnet ist und der gummielastische Körper (4) an dem äußeren Gehäusebauteil (2) angebracht ist durch die Einsatzhalterung (3), wobei das äußere Gehäusebauteil (2) zwischen einsatzhaltenden Abschnitten (3B) der Einsatzhalterung (3) angeordnet ist, wobei das Herstellungsverfahren für eine vibrationsschützende Vorrichtung umfasst:
vorausgehendes Einsetzen der Einsatzhalterung (3) in eine Form zum Formen des gummielastischen Körpers (4) oder Verwenden der Einsatzhalterung (3) selber als einen Abschnitt der Form, was bewirkt, dass der gummielastische Körper (4) um eine Fläche der Einsatzhalterung (3) gepackt ist und was ein Puffermaterial (5) bildet, welches aus dem gleichen Gummi wie der gummielastische Körper (4) besteht, einstückig an der Fläche der Einsatzhalterung (3); Anordnen der Einsatzhalterung (3) in eine Form, an welcher ein Hohlraum entsprechend einer Form des äußeren Gehäusebauteils (2) gebildet ist; und, durch Einspritzen von Harz in die Form und Bilden des äußeren Gehäusebauteils (2), Verursachen, dass das Puffermaterial (5) zwischen das äußere Gehäusebauteil (2) und die Einsatzhalterung (3) eingefügt wird.

5. Herstellungsverfahren für eine vibrationsschützende Vorrichtung nach Anspruch 4, worin ein Loch (3A) in der Einsatzhalterung (3) vorgesehen ist und der raue Gummi durch das Loch (3A) hindurchgeht und um die Fläche der Einsatzhalterung (3) gepackt ist.

## Revendications

1. Appareil anti-vibrations comprenant : une fixation de montage (1), qui est à raccorder à l'une des parties parmi une partie génératrice de vibrations et une partie réceptrice de vibrations ; un élément de boîtier extérieur (2) fabriqué à partir d'une résine, qui est à raccorder à l'autre des parties parmi la partie réceptrice de vibrations et la partie génératrice de vibrations ; un corps élastique en caoutchouc (4), qui est fixé entre la fixation de montage (1) et un insert de fixation (3), l'insert de fixation (3) étant placé le long d'une face périphérique intérieure de l'élément de boîtier extérieur (2), et le corps élastique en caoutchouc (4) étant fixé à l'élément de boîtier extérieur (2) par l'intermédiaire de l'insert de fixation (3), l'élément de boîtier extérieur (2) étant placé entre des parties de fixation d'insert (3B) de l'insert de fixation (3) ; l'appareil anti-vibrations étant **caractérisé par** l'interposition d'un matériau amortisseur (5) entre l'élément de boîtier extérieur (2) et l'insert de fixation (3).

2. Appareil anti-vibrations selon la revendication 1, dans lequel le matériau amortisseur (5) est constitué du même caoutchouc que le corps élastique en caoutchouc (4).

3. Appareil anti-vibrations selon la revendication 2, dans lequel un trou (3A) est ménagé dans l'insert de fixation (3), et le corps élastique en caoutchouc (4) et le matériau amortisseur (5) sont solidaires l'un de l'autre par le biais du trou (3A).

4. Procédé de fabrication d'un appareil anti-vibrations qui est constitué : d'une fixation de montage (1), qui est à raccorder à l'une des parties parmi une partie génératrice de vibrations et une partie réceptrice de vibrations ; d'un élément de boîtier extérieur (2) fabriqué à partir d'une résine, qui est à raccorder à l'autre des parties parmi la partie réceptrice de vibrations et la partie génératrice de vibrations ; et d'un corps élastique en caoutchouc (4), qui est fixé entre la fixation de montage (1) et un insert de fixation (3), l'insert de fixation (3) étant placé le long d'une face périphérique intérieure de l'élément de boîtier extérieur (2), et le corps élastique en caoutchouc (4) étant fixé à l'élément de boîtier extérieur (2) par l'intermédiaire de l'insert de fixation (3), l'élément de boîtier extérieur (2) étant placé entre des parties de fixation d'insert (3B) de l'insert de fixation (3) ; le procédé de fabrication d'un appareil anti-vibrations consistant à : insérer tout d'abord l'insert de fixation (3) dans un moule de moulage du corps élastique en caoutchouc (4), ou employer l'insert de fixation (3) lui-même comme partie du moule ; faire en sorte que le caoutchouc du corps élastique en caoutchouc (4) enrobe une surface de l'insert de fixation (3) et former un matériau amortisseur (5), qui est en le même caoutchouc que le corps élastique en caoutchouc (4), solidairement au niveau de la surface de l'insert de fixation (3) ; placer l'insert de fixation (3) dans un moule dans lequel est ménagé une cavité dont la forme correspond à celle de l'élément de boîtier extérieur (2) ; et, en injectant de la résine dans le moule et en formant l'élément de boîtier extérieur (2), faire en sorte que le matériau amortisseur (5) s'interpose entre l'élément de boîtier extérieur (2) et l'insert de fixation (3).

5. Procédé de fabrication d'un appareil anti-vibrations selon la revendication 4, dans lequel un trou (3A) est ménagé dans l'insert de fixation (3), et le caoutchouc brut passe à travers le trou (3A) et vient enrober la surface de l'insert de fixation (3).
